# EUROPÄISCHE PATENTANMELDUNG

(11) **EP 2 879 082 A1**
(43) Veröffentlichungstag der Anmeldung: **03.06.2015**
(21) Anmeldenummer: 13195077.6
(22) Anmeldetag: 29.11.2013
(51) Int. Cl.: G06Q 10/06, G06Q 10/04

(54) **Verfahren und System zum Betrieb eines Schrottplatzes**

(71) Anmelder: Siemens VAI Metals Technologies GmbH, 4031 Linz (AT)
(72) Erfinder: Bürkle, Eric, 77746 Schutterwald (DE); Dorndorf, Markus, 76534 Baden-Baden (DE)
(74) Vertreter: Maier, Daniel Oliver

(57) **Zusammenfassung**

Die Erfindung gibt ein Verfahren zum Betrieb eines Schrottplatzes (4) an, welcher mindestens ein Beladungsmittel (20), insbesondere einen Kran, und mindestens ein Transportmittel (22) umfasst, und von welchem aus eine schrottverwertende Anlage (1) beschickbar ist, wobei für eine Mehrzahl von Schrottsorten (3) einer jeweils bestimmten Qualität eine jeweilige Lagermenge und/oder eine jeweilige Lagerstätte (14) auf dem Schrottplatz (4) erfasst werden, wobei für mindestens eine Charge (16), insbesondere alle Chargen (16), zur Beschickung (34) der schrottverwertenden Anlage (1) eine Zusammensetzung (18) aus Schrottsorten (3) verschiedener Qualität vorgegeben wird, wobei eine aktuelle Position (24) des mindestens einen Beladungsmittels (20) erfasst wird, wobei jeweils ein kürzester Fahrweg (29) für das mindestens eine Beladungsmittel (20), und jeweils ein kürzester Fahrweg (30) und ein damit verbundener Ladeplan (28) für das mindestens eine Transportmittel (22) auf Basis der Lagerstätten (14) berechnet wird, und wobei das oder jedes Transportmittel (22) gemäß des ermittelten Ladeplans (28) und der vorgegebenen Zusammensetzung (18) der Charge (16) beladen wird. Die Erfindung gibt weiter ein System zum Betreiben eines Schrottplatzes (4) mit mindestens einer Steuereinheit (10) an, die zur Durchführung des erfindungsgemäßen Verfahrens eingerichtet ist.

## Beschreibung

Die Erfindung betrifft ein Verfahren zum Betrieb eines Schrottplatzes, welcher mindestens ein Beladungsmittel, insbesondere einen Kran, und mindestens ein Transportmittel umfasst, und von welchem aus eine schrottverwertende Anlage beschickbar ist. Die Erfindung betrifft weiter ein System zum Betreiben eines Schrottplatzes.

Für die Erzeugung von Stahl einer hohen Qualität ist die Qualität des als Rohstoff eingesetzten Schrottes wesentlich. Der Schrott wird dabei in einzelne Schrottsorten verschiedener Qualität kategorisiert, welche jeweils unterschiedliche Eigenschaften hinsichtlich der Beschaffenheit und Größe der Schrottteile, der Dichte des Schrottes, und des Anteils an Fremdmetallen und anderen Verunreinigungen sowie deren chemischer und physikalischer Natur aufweisen. Die unterschiedlichen Materialeigenschaften der einzelnen Schrottsorten haben ein unterschiedliches Verhalten im Lichtbogenofen zur Folge. Mithin entsteht beispielsweise beim Einschmelzen von verhältnismäßig minderwertigem Schrott mit einem hohen Anteil an Verunreinigungen mehr Schlacke, überdies kann auch mehr Energie zum Einschmelzen notwendig sein. Hiergegen ist abzuwägen, dass höherwertiger Schrott aus diesen Gründen einen höheren Marktwert hat und entsprechend zu höheren Rohstoffkosten führt.

Zur Beschickung des Lichtbogenofens steht häufig in dessen unmittelbarer Nähe ein Schrottplatz zur Verfügung, auf welchem Schrott in verschiedenen Sorten zwischengelagert wird. Um eine vorgegebene Menge Stahl einer bestimmten Zusammensetzung im Lichtbogenofen zu erzeugen, ist dieser mit verschiedenen Schrottsorten zu beschicken, deren Auswahl sich neben den chemischen und physikalischen Anforderungen an den Stahl und den genannten Kostengesichtspunkten auch nach der jeweiligen Verfügbarkeit richten muss.

Da der Schmelzprozess selbst meist zwischen 30 und 60 Minuten dauert und danach die Schmelze zur weiteren Verarbeitung abgegossen wird, können Verzögerungen von wenigen Minuten im Chargiervorgang des Schrotts sich bereits deutlich auf die Wirtschaftlichkeit der Gesamtanlage auswirken. Ebenso kann es aus Gründen der Wirtschaftlichkeit gegeben sein, als Rohstoff hochwertigere und damit zunächst kostenintensivere Schrottsorten zu verwenden, wenn eine entsprechend kürzere Einschmelzdauer durch die Zeit- und Energieersparnis die höheren Rohstoffkosten zu kompensieren vermag.

Insbesondere wenn bestimmte Schrottsorten in für den nächsten Schmelzprozess unzureichender Menge vorrätig sind, kann es vorkommen, dass Transportfahrzeuge und Kräne auf dem Schrottplatz ungünstig ausgelastet und bewegt werden, wodurch unerwünschte Verzögerungen im Schmelzprozess auftreten.

Ziel der Erfindung ist es, ein Verfahren zum Betrieb, insbesondere vollautomatischen Betriebs, eines Schrottplatzes anzugeben, durch welches eine schrottverwertende Anlage besonders kostengünstig und schnell mit dem erforderlichen Schrott beschickbar ist. Des Weiteren soll ein System zum Betreiben eines Schrottplatzes unter Einsatz eines solchen Verfahrens bereitgestellt werden.

Erfindungsgemäß wird die erstgenannte Aufgabe gelöst durch ein Verfahren zum Betrieb eines Schrottplatzes, welcher mindestens ein Beladungsmittel, insbesondere einen Kran, und mindestens ein Transportmittel umfasst, und von welchem aus eine schrottverwertende Anlage beschickbar ist, wobei für eine Mehrzahl von Schrottsorten einer jeweils bestimmten Qualität eine jeweilige Lagermenge und/oder eine jeweilige Lagerstätte auf dem Schrottplatz erfasst werden, wobei für mindestens eine Charge, insbesondere alle Chargen, zur Beschickung der schrottverwertenden Anlage eine Zusammensetzung aus Schrottsorten verschiedener Qualität vorgegeben wird, wobei eine aktuelle Position des mindestens einen Beladungsmittels erfasst wird, wobei jeweils ein kürzester Fahrweg für das mindestens eine Beladungsmittel, und jeweils ein kürzester Fahrweg und ein damit verbundener Ladeplan für das mindestens eine Transportmittel auf Basis der Lagerstätten berechnet wird, und wobei das oder jedes Transportmittel gemäß des ermittelten Ladeplans und der vorgegebenen Zusammensetzung der Charge beladen wird.

Die Ermittlung der kürzesten und damit schnellsten Fahrwege für das mindestens eine Beladungsmittel und das mindestens eine Transportmittel ermöglicht eine besonders effektive und schnelle Zusammenstellung der benötigten Schrottqualitäten auf dem jeweiligen Transportmittel und in Folge eine besonders schnelle Bereitstellung des beladenen Transportmittels zur Beschickung der schrottverwertenden Anlage, insbesondere eines Elektrolichtbogenofens, mit einer der Beladung entsprechenden Charge an Schrott. Die Auslastung des mindestens einen Beladungsmittels sowie des mindestens einen Transportmittels wird optimiert, so dass ggf. insgesamt weniger Beladungsmittel und Transportmittel als bisher benötigt eingesetzt werden können. Der Chargierbetrieb der schrottverwertenden Anlage erfolgt aufgrund der schnellen Bereitstellung neuer Chargen effizient und ohne Wartezeiten, so dass eine permanent optimale Auslastung der Anlage gewährleistet ist. Die schrottverwertende Anlage produziert ein Produkt, insbesondere Metallschmelze, bei schnellstmöglichen Einschmelzzyklen mit optimaler Produktivität und daher besonders kosteneffizient. Der Betrieb des Schrottplatzes erfolgt dabei insbesondere vollautomatisch, so dass die Personalkosten gesenkt werden können.

Als Beladungsmittel wird hierbei insbesondere ein Kran eingesetzt, wobei der oder jeder Kran beispielsweise als ein Portalkran oder als ein Brückenkran oder als ein Drehkran ausgebildet ist. Aber auch die Verwendung eines Baggers als Beladungsmittel ist möglich.

Als "aktuelle Position" des mindestens einen Beladungsmittels wird, in Abhängigkeit der Art des eingesetzten Beladungsmittels, in allen benötigten Dimensionen, d.h. x-, y-, und ggf. z-Richtung, bestimmt, die zur Beladung von Transportmitteln erforderlich sind. Bei der Verwendung eines Krans ist dabei nicht nur seine absolute Position in x- und y-Richtung von Relevanz, sondern auch der Weg, den eine Laufkatze des Krans im Hinblick auf diese absolute Position zurücklegen muss wie auch die Höhe, die ein an der Laufkatze hängender Schrottaufnehmer, insbesondere in Form eines Greifers oder Magnets, des Krans zur Aufnahme des Schrotts und schließlich zum Ablegen des Schrotts auf das Transportmittel oder in einen leeren Schrottkorb auf dem Transportmittel in z-Richtung zurücklegen muss.

Unter einem Transportmittel wird insbesondere ein Fahrzeug verstanden, welches eine Anzahl fest vorgegebener Fahrspuren, insbesondere Gleise, befährt. Alternativ handelt es sich dabei um ein Fahrzeug, welches keine derartigen Einschränkungen bei der Wahl des Fahrwegs aufweist, also beispielsweise um einen Lastkraftwagen, Gabelstapler oder ähnliches. Der Begriff des Transportmittels beinhaltet dabei auch ein im Betriebszustand auf dem Fahrzeug positioniertes Behältnis, insbesondere einen Schrottkorb, in welchem der Schrott transportiert wird.

Als eine schrottverwertende Anlage ist insbesondere ein Elektrolichtbogenofen vorgesehen. Als ein Produkt der schrottverwertenden Anlage wird insbesondere eine Metall- oder Stahlschmelze erzeugt, welche zu Metall oder Stahl weiterverarbeitet wird. Üblicherweise wird ein Elektrolichtbogenofen mit mehreren Chargen an Schrott chargiert, bevor eine Metallschmelze abgestochen werden kann. Demnach werden nacheinander mehrere mit Schrott oder insbesondere mit Schrottkörben voll Schrott beladene Transportmittel angefahren und der Schrott in den Ofen chargiert, um eine insgesamt ausreichende Menge Metallschmelze für einen Abstich zu erhalten. Insbesondere ist bei der Erfassung der Lagerstätten der Schrottsorten von Vorteil, wenn ein Lageplan für die Lagerstätten erstellt wird. Dies ist sinnvoll, wenn sich die Verteilung der einzelnen Lagerstätten über einen längeren Zeitraum nicht ändert.

In einer besonders bevorzugten Ausführungsform der Erfindung wird jeweils der kürzeste Fahrweg für das mindestens eine Beladungsmittel und jeweils der kürzeste Fahrweg und der damit verbundene Ladeplan für das mindestens eine Transportmittel nach der Lösung eines "Handlungsreisenden-Problems" auf Basis der Lagerstätten berechnet. Dabei wird Ort, Befüllungsart und Befüllungsgrad einer Lagerstätte mit einer bestimmten Schrottsorte berücksichtigt.

Um also eine besonders effiziente Beladung des mindestens einen Transportmittels zu erreichen, werden die Anfahrten zu den einzelnen Lagerstätten als ein "Handlungsreisenden-Problem" interpretiert und mit den für dieses Problem zur Verfügung stehenden Lösungsverfahren gelöst. Das Handlungsreisenden-Problem besteht darin, eine Reihenfolge für das Abfahren einer Mehrzahl von Punkten, deren paarweise Entfernungen gegeben sind, so zu wählen, dass die gesamte Strecke des Handlungsreisenden möglichst kurz ist. Das Handlungsreisenden-Problem ist deterministisch lösbar.
Siehe hierzu die Ausführungen unter:
http://de.wikipedia.org/wiki/Problem_des_Handlungsreisenden

Angewandt auf einen Schrottplatz bilden die einzelnen Lagerstätten der im Rahmen der vorgegebenen Zusammensetzung der Charge(n) zu verwendenden Schrottsorten die anzufahrenden Punkte. Das mindestens eine Beladungsmittel stellt den Handlungsreisenden dar. Das Verfahren wird nun zunächst für das mindestens eine Beladungsmittel gelöst. Die für das mindestens eine Beladungsmittel ermittelte Reihenfolge der nacheinander anzufahrenden Lagerstätten wird insbesondere auch als Lösungsweg für das mindestens eine, damit zu beladende Transportmittel herangezogen. Insbesondere ist dieses Vorgehen effizient für Schrottplätze, deren Lagerstätten sich auf zwei zueinander parallelen, langestreckten Bereichen befinden, zwischen denen das mindestens eine Transportmittel verkehrt. Insbesondere wird die Position des mindestens einen Transportmittels als ein weiterer abzufahrender Punkt im Handlungsreisenden-Problem aufgefasst, welcher jeweils einen variablen Abstand zu den anderen vorgegebenen Punkten aufweist, um das Problem entsprechend dynamisch zu lösen ist.

Falls das mindestens eine Transportmittel sich nur auf einer Anzahl fest vorgegebener Fahrspuren bewegen kann, können alternativ die Schnittpunkte des Lösungsweges, welchen das Handlungsreisenden-Problem für das mindestens eine Beladungsmittel ergibt, mit der oder jeder Fahrspur des mindestens einen Transportmittels als ein neues Handlungsreisenden-Problem für das mindestens eine Transportmittel aufgefasst werden, welches hierarchisiert in Abhängigkeit des Problems für das mindestens eine Beladungsmittel zu lösen ist.

Günstiger Weise wird eine von der schrottverwertenden Anlage zu erzeugende Menge eines Produktes in einer bestimmten Qualität vorgegeben, und die Zusammensetzung der mindestens einen Charge, insbesondere von allen Chargen, aus Schrottsorten jeweils verschiedener Qualität für die anhand ihrer vorhandenen Lagermengen und/oder Lagerstätten nach Kosten- und/oder Zeit- und/oder Energieparametern vorgegeben.

Insbesondere sind für die Berechnung der Zusammensetzung der Charge(n) die Lagermengen und/oder Lagerstätten der einzelnen Schrottsorten jeweils verschiedener Qualität vorher zu erfassen. Dies erfolgt insbesondere mittels einer Erfassungseinrichtung, wie einem 2D- oder 3D-Laserscanner.

Hierbei liegt die Überlegung zugrunde, dass ein besonders kosten- und zeiteffizientes Verfahren zur Beschickung einer schrottverwertenden Anlage zunächst eine möglichst effiziente Zusammensetzung der Charge(n) erfordert. Um in der schrottverwertenden Anlage ein Produkt einer georderten Qualität herzustellen, kann es verschiedene mögliche Zusammensetzungen für die entsprechende(n) Charge(n) geben. Für einen kostengünstigen Weiterverarbeitungsprozess ist dabei der Rohstoffpreis der jeweiligen aufgrund ihrer Qualität in Betracht kommenden Schrottsorten ebenso zu berücksichtigen wie die für die jeweilige Schrottsorte im Weiterverarbeitungsprozess anfallenden Energiekosten. Insbesondere kann hierbei überdies Schrott einer höheren Qualität bisweilen eine energetisch günstigere Weiterverarbeitung aufweisen.

Da auf einem Schrottplatz jedoch möglicherweise nicht immer und zu jeder Zeit jede Schrottsorte in für jedes beliebige Produkt ausreichender Menge vorrätig ist, kann es erforderlich sein, die Zusammensetzung der Charge(n) in Abhängigkeit der erfassten momentanen Lagerbestände der einzelnen Schrottsorten abzuändern.

Bevorzugt wird jeder erfassten Schrottsorte eine quantitative Kennzahl zugeordnet, in welche alle für die Auswahl der Zusammensetzung der Charge(n) relevanten Kosten- und/oder Zeit- und/oder Energieparameter eingehen. Insbesondere kann hierbei in die Kennzahl einer Schrottsorte auch die Entfernung ihrer Lagerstätte zur schrottverwertenden Anlage eingehen. Die Zusammensetzung der Charge(n) kann dann über eine Optimierung der Gesamtkennzahl erfolgen, welche sich aus den einzelnen Kennzahlen der zu verwendenden Schrottsorten, jeweils nach ihrem zu verwendenden Mengenanteil gewichtet, errechnet.

In einer vorteilhaften Ausgestaltung des Verfahrens wird vor der Ermittlung des jeweiligen Fahrwegs für das mindestens eine Beladungsmittel und des jeweiligen Fahrwegs für das mindestens eine Transportmittel jeweils eine aktuelle Position des mindestens einen Transportmittels erfasst. Umfasst der Schrottplatz nur ein Transportmittel, so ist die Position zu Beginn eines Ladevorganges meist an einem vorgegebenen Übergabepunkt in unmittelbarer Nähe der schrottverwertenden Anlage. Umfasst der Schrottplatz jedoch mehrere Transportmittel, ist es von Vorteil, vor Beginn der Beladungsplanung deren jeweilige Positionen zu erfassen.

Bevorzugt wird dabei die aktuelle Position des mindestens einen Transportmittels durch mindestens eine Messeinrichtung erfasst. Dies ermöglicht eine besonders einfache Positionserfassung. Insbesondere kann dabei der Fahrweg auf einer Anzahl fest vorgegebener Spuren, beispielsweise Gleise oder Fahrrinnen, erfolgen. Eine Positionsbestimmung erfolgt insbesondere mittels mindestens eines, an einem Transportmittel angeordneten Lesekopfes, welcher mit entlang des Fahrweges des Transportmittels angeordneten Signalgebern, insbesondere auf Magnetbasis, korrespondiert. Auch eine funkbasierte Distanzmessung ist einsetzbar, wobei mindestens ein Sender am Transportmittel und an geeigneter Stelle mindestens ein Empfänger im Bereich des Schrottplatzes ortsunveränderlich installiert wird. Bei beiden genannten Messeinrichtungen sind häufig Referenzpunkte vorgesehen, die einen Abgleich der messtechnisch erfassten Position mit der tatsächlichen Position des Transportmittels ermöglichen. Auch der Einsatz eines terrestrischen oder extraterrestrischen Satellitensystems zur Ortung eines Transportmittels ist möglich. Weiterhin ist eine Kombination von verschiedenartigen Messeinrichtungen möglich, um eine optimale Positionsbestimmung zu erhalten.

Günstiger Weise werden die Lagermengen und die Lagerstätten von Schrottsorten einer jeweils bestimmten Qualität mittels mindestens eines elektronischen Messsystems erfasst. Das Messsystem kann dabei insbesondere einen 3D-Laserscanner und/oder einen Infrarot-Scanner und/oder einen UltraschallSensor umfassen. Eine elektronische Erfassung erlaubt eine besonders effiziente Verarbeitung der erfassten Ergebnisse im weiteren Verfahren.

Bevorzugt wird die erfasste Verteilung der Lagermengen und der Lagerstätten von Schrottsorten einer jeweils bestimmten Qualität für eine virtuelle Aufteilung des Schrottplatzes in den Lagerstätten entsprechende Zonen herangezogen. Dies ist insbesondere dann von Vorteil, wenn der Schrottplatz keine Trennwände zur Separation der Lagerstätten einzelner Schrottsorten voneinander aufweist, sondern verschiedene Schrottsorten ohne bauliche Trennung direkt nebeneinander lagern. Die einzelnen Lagerstätten können dann aus der Verteilung, beispielsweise aus einem Höhenprofil einzelner Halden von Schrott je einer Sorte, bestimmt werden, und jeder der so bestimmten Lagerstätten kann in der virtuellen Aufteilung des Schrottplatzes eine Zone zugewiesen werden.

In einer vorteilhaften Ausgestaltung der Erfindung wird die jeweilige aktuelle Position des mindestens einen Beladungsmittels mittels mindestens einer weiteren Messeinrichtung erfasst. Die weitere Messeinrichtung kann dabei insbesondere einen 1D-Laserscanner und/oder einen auf Funk basierenden Entfernungsmesser und/oder eine auf Induktion basierende Einrichtung umfassen. Eine elektronische Positionserfassung des mindestens einen Beladungsmittels erlaubt eine besonders effiziente Verarbeitung der erfassten Messdaten im weiteren Verfahren.

Die jeweilige aktuelle Position des mindestens einen Beladungsmittels wird vorteilhafterweise über eine Anzahl von Signalen, welche vom jeweiligen Beladungsmittel aus emittiert werden, erfasst. Eine Positionsbestimmung über ein aktiv vom zu bestimmenden Objekt gesendetes Signal kann insbesondere bei großen Anlagen mit großen räumlichen Bereichen sinnvoll sein.

Bevorzugt wird in der schrottverwertenden Anlage der Prozessfortschritt erfasst, wobei das mindestens eine Transportmittel in zeitlicher Abhängigkeit vom Prozessfortschritt beladen wird. Dies ermöglicht es, den Ladevorgang so zu steuern, dass die schrottverwertende Anlage unmittelbar nach dem Ende eines Verwertungsprozesses neu mit dem geforderten Schrott beschickt wird und sofort den nächsten Verwertungsprozess initiieren kann, ohne dass durch ineffiziente Beschickungsplanung Verzögerungen eintreten. Somit kann die schrottverwertende Anlage optimal ausgelastet arbeiten.

In einer weiter vorteilhaften Ausgestaltung werden die erfassten Lagermengen von Schrottsorten einer jeweils bestimmten Qualität an eine Inventureinheit übermittelt. Die in der Inventureinheit geführten Lagerbestände können dazu herangezogen werden, rechtzeitig mögliche Versorgungsengpässe bei einzelnen Schrottsorten zu erkennen und durch gezielte Zukäufe abzuwenden. Der jeweilige Kaufauftrag kann dabei automatisiert erfolgen, oder durch einen Einkaufsmanager erteilt werden, der seine Entscheidung auf die in der Inventureinheit registrierten Bestände stützt. Insbesondere kann die Inventureinheit die vorhandenen Lagerbestände mit den Auftragseingang der schrottverwertenden Anlage und daraus erstellten Simulationen der günstigsten möglichen Chargen und der dazu benötigten Schrottsorten abgleichen, um für die nach Rohstoffpreis und Energieverbrauch jeweils möglichst kostengünstige Zusammensetzung der Charge(n) in keinen Versorgungsengpass zu geraten.

Günstiger Weise werden für die Berechnung der Fahrwege des mindestens einen Beladungsmittels und des mindestens einen Transportmittels und die Berechnung des Ladeplans durch die zu verwendende(n) Schrottsorte(n) gegebene prozess- und/oder sicherheitstechnische und/oder energetische Randbedingungen in der schrottverwertenden Anlage berücksichtigt. Ist die schrottverwertende Anlage beispielsweise gegeben durch einen Elektrolichtbogenofen, insbesondere zur Stahlerzeugung, welcher von oben durch ein einfaches Einfüllen des Schrottes, beispielsweise durch Kippen einer Schrottfähre oder Öffnen des Bodens eines Schrottkorbes, beschickt wird, so ist zu berücksichtigen, dass bestimmte Chargen nicht zu bestimmten Prozesszeiten verwendbar sind. So kann dichter und damit schwerer Schrott beim Herabfallen den Boden des Elektrolichtbogenofens beschädigen. Aus Sicherheitsgründen wird daher bevorzugt für die unterste Lage im Elektrolichtbogenofen Schrott geringer Dichte eingesetzt. Ebenso ist in einem Lichtbogenofen die Anordnung der Elektroden zu berücksichtigen, da größere, sperrige Schrottteile die Elektroden beschädigen könnten. Somit ist nicht nur die chemische Zusammensetzung einer Charge von Bedeutung für den Prozessablauf, sondern es ist auch die physikalische Beschaffenheit einer Schrottcharge maßgebend. Entsprechend wird auch dieser Parameter bei der Zusammenstellung der Charge(n) berücksichtigt.

Als weiter vorteilhaft erweist es sich, wenn das Abfahren der Fahrwege von Transport- und Belademittel gemäß des ermittelten Ladeplans und/oder das Beladen des mindestens einen Transportmittels durch das mindestens eine Beladungsmittel durch vollautomatische Steuerung erfolgt. Aber auch eine manuelle oder teilautomatische Steuerung ist möglich. Eine Vielzahl an Schrottplätzen weisen manuelle oder teilautomatische Steuerungen der Transport- und Beladungsmittel auf. In diesem Fall können die ermittelten Fahrwege und der ermittelte Ladeplan als Anweisung, bevorzugt auf einem Display, an den oder die Steuernden ausgegeben werden.

Bevorzugt wird nach einer Vielzahl von Chargen eine Häufigkeitsverteilung der in den Chargen verwendeten Schrottsorten erfasst, wobei diese Häufigkeitsverteilung unter Berücksichtigung der Entfernung der einzelnen Lagerstätten zur schrottverwertenden Anlage zu einer Umverteilung der Lagestätten der einzelnen Schrottsorten auf dem Schrottplatz herangezogen wird. Das Verfahren sieht somit vor, dass die Verteilung von Lagerstätten auf dem Schrottplatz in vorzugebenden Abständen an die statistische Häufigkeit der Verwendung der jeweiligen Schrottsorten anzupassen ist. Insbesondere ist dies von Vorteil, wenn die einzelnen Schrottsorten eine von der Gleichverteilung erheblich abweichende Verwendungshäufigkeit aufweisen, also wenn eine Anzahl an Schrottsorten fast immer und eine weitere Anzahl an Schrottsorten fast nie Verwendung findet. In diesem Fall ist es besonders günstig, eine statistisch besonders häufig verwendete Schrottsorte in einer Lagerstätte möglichst nahe der schrottverwertenden Anlage zu lagern, da dies über mehrere Chargen gemittelt den Fahrweg verkürzt, und somit Zeit sowie Energie einspart. Der Vorgang der Umverteilung von Schrottsorten kann dabei erfolgen, wenn eine Mehrzahl von Lagerstätten durch entsprechende Ladevorgänge entleert ist, bei Produktionsstillstand oder im Rahmen einer turnusgemäßen Wartung.

Besonders vorteilhaft ist es weiterhin, wenn die Lagerstätten des Schrottplatzes mittels des mindestens einen Beladungsmittels nach der Lösung eines "Handlungsreisenden-Problems" beladen werden. Dies ermöglicht eine besonders schnelle und effektive Befüllung der Lagerstätten und minimiert eventuelle Produktionsstillstandszeiten aufgrund von Engpässen in der Schrottversorgung. Dabei werden die unterschiedlichen Schrottsorten ggf. über unterschiedliche Anlieferungswege angeliefert, insbesondere per Schiff, Zug oder LKW.

Die zweitgenannte Aufgabe wird erfindungsgemäß gelöst durch ein System zum Betreiben eines Schrottplatzes, umfassend mindestens ein Beladungsmittel, insbesondere einen Kran, mindestens ein Transportmittel, und mindestens eine Steuereinheit, die zur Durchführung des vorbeschriebenen, erfindungsgemäßen Verfahrens eingerichtet ist. Die für das Verfahren und seine Weiterbildungen genannten Vorteile gehen dabei sinngemäß auf das System zum Betreiben des Schrottplatzes über.

Vorteilhafterweise umfasst das System weiterhin mindestens eine Erfassungseinrichtung, insbesondere einen 2D- oder 3D-Laserscanner, die zur Vermessung der Lagerstätten eingerichtet und an dem mindestens einen Beladungsmittel angeordnet ist.

Bevorzugt weist das System zu einer Positionsbestimmung des mindestens einen Transportmittels mindestens eine Messeinrichtung auf. Eine Positionsbestimmung erfolgt insbesondere mittels mindestens eines, an einem Transportmittel angeordneten Lesekopfes, welcher mit entlang des Fahrweges des Transportmittels angeordneten Signalgebern, insbesondere auf Magnetbasis, korrespondiert. Auch eine funkbasierte Distanzmessung ist einsetzbar, wobei mindestens ein Sender am Transportmittel und an geeigneter Stelle mindestens ein Empfänger im Bereich des Schrottplatzes ortsunveränderlich installiert wird. Bei beiden genannten Messeinrichtungen sind häufig Referenzpunkte vorgesehen, die einen Abgleich der messtechnisch erfassten Position mit der tatsächlichen Position des Transportmittels ermöglichen. Auch der Einsatz eines terrestrischen oder extraterrestrischen Satellitensystems zur Ortung eines Transportmittels ist möglich. Weiterhin ist eine Kombination von verschiedenartigen Messeinrichtungen möglich, um eine optimale Positionsbestimmung zu erhalten.

Weiterhin weist das System vorzugsweise zur Positionsbestimmung des mindestens einen Beladungsmittels mindestens eine weitere Messeinrichtung auf. Die weitere Messeinrichtung kann dabei insbesondere einen 1D-Laserscanner und/oder einen auf Funk basierenden Entfernungsmesser und/oder eine auf Induktion basierende Einrichtung umfassen.

Ein Ausführungsbeispiel der Erfindung wird beispielhaft anhand der Figuren erläutert. Dabei zeigt:
- FIG 1: ein Verfahren zum Betrieb eines Schrottplatzes als Flussdiagramm unter Anwendung der Lösung des "Handlungsreisenden-Problems", und
- FIG 2: ein System zum Betreiben eines Schrottplatzes.

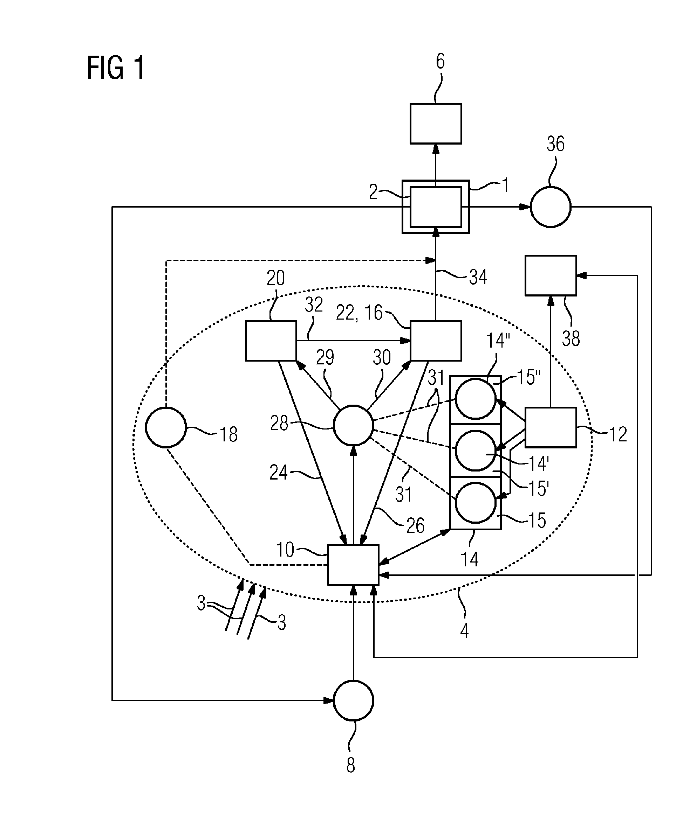

In FIG 1 ist ein Flussdiagram des Verfahrens angegeben. Eine schrottverwertende Anlage 1, welche hier als Elektrolichtbogenofen 2 ausgebildet ist, wird von einem Schrottplatz 4 aus mit Schrott beschickt, um als Produkt eine Metallschmelze 6 einer vorgegebenen Qualität und Zusammensetzung herzustellen. Die Sollvorgaben 8 für die zu erzeugende Metallschmelze 6 werden an eine Steuereinheit 10 übermittelt.

Zunächst werden dafür von einer Erfassungseinrichtung 12, welche hier als 3D-Laserscanner ausgebildet ist, alle Schrottsorten unterschiedlicher Qualität auf dem Schrottplatz 4 in ihrer Menge und räumlichen Verteilung erfasst. Durch die räumliche Verteilung und Höhenprofile der einzelnen Schrottberge, welche jeweils Schrott einer bestimmten, ebenfalls erfassten Qualität führen, sind dabei die Lagerstätten 14, 14', 14" der einzelnen Schrottsorten definiert. Diese Information wird in der Steuereinheit 10 dazu verwendet, den erfassten Lagerstätten 14, 14', 14" des Schrottplatzes 4 entsprechende virtuelle Zonen 15, 15', 15" zuzuweisen.

Die Steuereinheit 10 verfügt nun über die Informationen zu den Sollvorgaben 8 der zu produzierenden Metallschmelze 6 sowie den Lagermengen und räumlichen Verteilungen des Schrotts im Bereich einer jeden Lagerstätte 14, 14', 14" für jede einzelne Schrottsorte. Intern wird hierbei jeder Schrottsorte eine quantitative Kennzahl zugeordnet, welche es erlaubt, die einzelnen Schrottsorten nach Kosten-, Energie- und Zeitparametern zu ordnen. Auf Basis der Sollvorgaben 8 sowie der Lagermengen der jeweiligen Schrottsorten in Verbindung mit ihrer jeweiligen Kennzahl wird nun mindestens eine Charge 16 zusammengesetzt, mit der der Elektrolichtbogenofen 2 beschickt werden soll. Prozess- und sicherheitstechnische Überlegungen gehen als Randbedingungen in die Vorgabe der Ladefolge 18 gemäß der Zusammensetzung der Charge 16 ein. Dabei ist es ratsam, bei der Ladefolge 18 den Prozessstatus des Elektrolichtbogenofens 2 zu berücksichtigen, um die physikalischen Eigenschaften der ausgewählten Schrottsorten, insbesondere die Schrottdichte und Größe der Schrottteile, entsprechend zu berücksichtigen. So soll die oberste Schicht Schrott im Elektrolichtbogenofen 2 vorteilhafte Einschmelzeigenschaften aufweisen, was bei der Erstellung der Ladefolge 18 von Schrottsorten zur Bildung der Charge(n) 16 ebenso zu berücksichtigen ist.

Nach Berechnung und Festlegung der Ladefolge 18 werden von der Steuereinheit 10 für ein Beladungsmittel 20, welches hier als ein Kran ausgebildet ist, und für ein Transportmittel 22, welches hier als eine Schrottfähre ausgebildet ist, die jeweilige aktuelle Position 24, 26 erfasst. Mit der erfassten Position 24 des Krans 20 und der erfassten Position 26 der Schrottfähre 22 errechnet nun die Steuereinheit 10 für die Ladefolge 18 einen entsprechenden Ladeplan 28, bestehend aus einem Fahrweg 29 für den Kran 20, einem Fahrweg 30 für die Schrottfähre 22 und den entsprechenden Ladevorgaben, indem die virtuellen Zonen 15, welche als Lagerstätten 14, 14', 14" von zu verwendendem Schrott identifiziert wurden und demnach vom Kran 20 abzufahren sind, hier als Wegmarken 31 eines Handlungsreisenden-Problems interpretiert werden, und entsprechend dessen Lösung die Fahrwege 29, 30 vorgegeben werden. Gemäß dem Ladeplan 28 belädt daraufhin der Kran 20 die Schrottfähre 22 entlang der ermittelten Fahrwege 29, 30. Das Handlungsreisenden-Problem und Lösungsverfahren desselben sind dem Fachmann bekannt und nicht Gegenstand der Erfindung. Auch alternative Algorithmen ähnlich dazu sind hier einsetzbar.

Nach Abschluss des Ladevorganges 32 beginnt die Beschickung 34 des Elektrolichtbogenofens 2 mit der/den Charge(n) 16 gemäß der Ladefolge 18. Während des Schmelzprozesses zur Erzeugung der gewünschten Metallschmelze 6 wird vom Elektrolichtbogenofen 2 der Prozessfortschritt 36 an die Steuereinheit 10 gemeldet, so dass diese den nächsten Ladevorgang rechtzeitig berechnen und initiieren kann, damit der Lichtbogenofen unter bestmöglicher Auslastung arbeitet.

Die jeweiligen vorhandenen Mengen an Schrott verschiedener Qualität werden von der Erfassungseinrichtung 12 an eine Inventureinheit 38 gemeldet, auf die das Einkaufsmanagement des Schrottplatzes 4 zugreift.

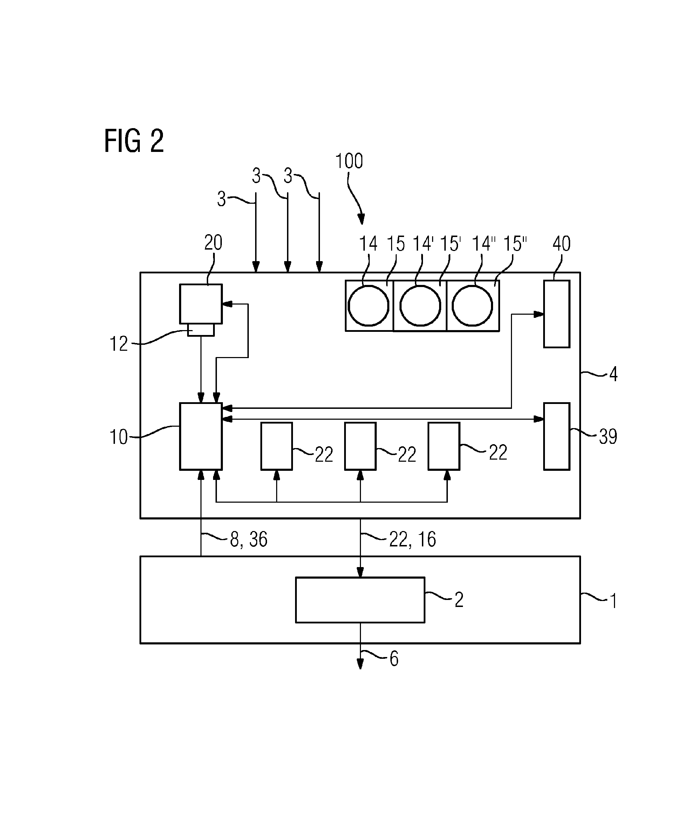

FIG 2 zeigt ein System 100 zum Betreiben eines Schrottplatzes 4, umfassend ein Beladungsmittel 20 in Form eines Krans, mehrere Transportmittel 22 in Form von Schrottfähren, und eine Steuereinheit 10, die zur Durchführung des erfindungsgemäßen Verfahrens eingerichtet ist. Weiterhin ist eine Erfassungseinrichtung 12 in Form eines 3D-Laserscanners zur Vermessung der Lagerstätten 14, 14', 14" vorhanden, die mit der Steuereinrichtung 10 datentechnisch verbunden ist. Gleiche Bezugszeichen wie in FIG 1 kennzeichnen gleiche Elemente. Die Steuereinrichtung 10 erhält hier Sollvorgaben 8 zur gewünschten Zusammensetzung einer Metallschmelze 6 (siehe FIG 1) und Informationen zum Prozessfortschritt 36 des Elektrolichtbogenofens 2.

Zur Positionsbestimmung der Transportmittel 22 ist eine Messeinrichtung 39 in Form eines GPS-Systems vorhanden, die mit der Steuereinrichtung 10 kommuniziert. Zur Positionsbestimmung des Beladungsmittels 20 ist eine weitere Messeinrichtung 40 in Form eines auf Funk basierenden Entfernungsmessers vorhanden, welche ebenfalls mit der Steuereinheit 10 kommuniziert. Die Steuereinheit 10 berechnet den optimalen Fahrweg 29, 30 für das jeweilige Transportmittel 22 und das Beladungsmittel 20 nach dem Lösungsweg des Handlungsreisenden-Problems und gibt entsprechende Fahrbefehle an deren Antriebseinheiten. Sobald eine Charge 16 (siehe FIG 1) in einem Transportmittel 22 vorbereitet wurde, wird dieses zum Elektrolichtbogenofen 2 bewegt und die Charge 16 in diesen eingefüllt. Die Metallschmelze 6 basiert dabei in der Regel auf mehreren nacheinander eingefüllten und eingeschmolzenen Chargen 16. An den Schrottplatz 4 werden verschiedene Schrottsorten 3 angeliefert, die per Beladungsmittel 20 nach einem weiteren Lösungsweg des Handlungsreisenden-Problems zu den Lagerstätten 14, 14', 14" verbracht und sortenrein abgelegt werden. Dabei werden die Schrottsorten 3 ggf. über unterschiedliche Anlieferungswege angeliefert, insbesondere per Schiff, Zug oder LKW.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Verfahren zum Betrieb eines Schrottplatzes (4), welcher mindestens ein Beladungsmittel (20), insbesondere einen Kran, und mindestens ein Transportmittel (22) umfasst, und von welchem aus eine schrottverwertende Anlage (1) beschickbar ist, wobei für eine Mehrzahl von Schrottsorten (3) einer jeweils bestimmten Qualität eine jeweilige Lagermenge und/oder eine jeweilige Lagerstätte (14) auf dem Schrottplatz (4) erfasst werden,
wobei für mindestens eine Charge (16), insbesondere alle Chargen (16), zur Beschickung (34) der schrottverwertenden Anlage (1) eine Zusammensetzung (18) aus Schrottsorten (3) verschiedener Qualität vorgegeben wird,
wobei eine aktuelle Position (24) des mindestens einen Beladungsmittels (20) erfasst wird,
wobei jeweils ein kürzester Fahrweg (29) für das mindestens eine Beladungsmittel (20), und jeweils ein kürzester Fahrweg (30) und ein damit verbundener Ladeplan (28) für das mindestens eine Transportmittel (22) auf Basis der Lagerstätten (14) berechnet wird,
und wobei das oder jedes Transportmittel (22) gemäß des ermittelten Ladeplans (28) und der vorgegebenen Zusammensetzung (18) der Charge (16) beladen wird.

2. Verfahren nach Anspruch 1,
wobei jeweils der kürzeste Fahrweg (29) für das mindestens eine Beladungsmittel (20), und jeweils der kürzeste Fahrweg (30) und der damit verbundene Ladeplan (28) für das mindestens eine Transportmittel (22) nach der Lösung eines "Handlungsreisenden-Problems" auf Basis der Lagerstätten (14) berechnet wird.

3. Verfahren nach Anspruch 1 oder Anspruch 2,
wobei eine von der schrottverwertenden Anlage (1) zu erzeugende Menge eines Folgeproduktes (6) in einer bestimmten Qualität vorgegeben wird, und
wobei die Zusammensetzung (18) der mindestens einen Charge (16), insbesondere von allen Chargen (16), aus Schrottsorten (3) jeweils verschiedener Qualität für die anhand ihrer vorhandenen Lagermengen und/oder Lagerstätten nach Kosten- und/oder Zeit- und/oder Energieparametern vorgegeben wird (18).

4. Verfahren nach einem der Ansprüche 1 bis 3,
wobei vor der Ermittlung des jeweiligen Fahrwegs (29) für das mindestens eine Beladungsmittel (20) und des jeweiligen Fahrwegs (30) für das mindestens eine Transportmittel (22) jeweils eine aktuelle Position (26) des mindestens einen Transportmittels (22) erfasst wird.

5. Verfahren nach Anspruch 4,
wobei die aktuelle Position (26) des mindestens einen Transportmittels (22) durch mindestens eine Messeinrichtung erfasst wird.

6. Verfahren nach einem der vorhergehenden Ansprüche,
wobei die Lagermengen und/oder die Lagerstätten (14) von Schrottsorten (3) einer jeweils bestimmten Qualität mittels mindestens eines elektronischen Messsystems erfasst werden.

7. Verfahren nach einem der vorhergehenden Ansprüche,
wobei die erfasste Verteilung der Lagermengen und/oder der Lagerstätten (14) von Schrottsorten (3) einer jeweils bestimmten Qualität für eine virtuelle Aufteilung des Schrottplatzes in Zonen (15) herangezogen wird.

8. Verfahren nach einem der vorhergehenden Ansprüche,
wobei die jeweilige aktuelle Position (24) des oder jedes Beladungsmittels (20) mittels mindestens eines elektronischen Messsystems erfasst wird.

9. Verfahren nach einem der vorhergehenden Ansprüche,
wobei die jeweilige aktuelle Position (24) des oder jedes Beladungsmittels (20) über eine Anzahl von Signalen, welche vom jeweiligen Beladungsmittel (20) aus emittiert werden, erfasst wird.

10. Verfahren nach einem der vorhergehenden Ansprüche,
wobei in der schrottverwertenden Anlage (1) ein Prozessfortschritt (36) erfasst wird, und wobei das oder jedes Transportmittel (22) in zeitlicher Abhängigkeit des Prozessfortschritts (36) beladen wird.

11. Verfahren nach einem der vorhergehenden Ansprüche,
wobei die erfassten Lagermengen von Schrottsorten (3) einer jeweils bestimmten Qualität an eine Inventureinheit (38) übermittelt werden.

12. Verfahren nach einem der vorhergehenden Ansprüche,
wobei für die Berechnung der Fahrwege (29, 30) des mindestens einen Beladungsmittels (20) und des mindestens einen Transportmittels (22) und die Berechnung des Ladeplans (28) durch die oder jede zu verwendende Schrottsorte (3) gegebene prozesstechnische und/oder sicherheitstechnische und/oder energetische Randbedingungen in der schrottverwertenden Anlage (1) berücksichtigt werden.

13. Verfahren nach einem der vorhergehenden Ansprüche,
wobei das Abfahren der Fahrwege (29, 30) gemäß des ermittelten Ladeplans (28) und/oder das Beladen (32) des oder jedes Transportmittels (22) durch das mindestens eine Beladungsmittel (20) durch eine vollautomatische Steuerung erfolgt.

14. Verfahren nach einem der vorhergehenden Ansprüche,
wobei nach einer Vielzahl von Chargen (16) eine Häufigkeitsverteilung der in den Chargen (16) verwendeten Schrottsorten (3) erfasst wird, und diese Häufigkeitsverteilung unter Berücksichtigung der Entfernung der einzelnen Lagerstätten (14) zur schrottverwertenden Anlage (1) zu einer Umverteilung der Lagestätten (14) der einzelnen Schrottsorten (3) auf dem Schrottplatz (4) herangezogen wird.

15. Verfahren nach einem der vorhergehenden Ansprüche,
wobei die Lagerstätten (14) des Schrottplatzes (4) mittels des mindestens einen Beladungsmittels (20) nach der Lösung eines "Handlungsreisenden-Problems" beladen werden.

16. System (100) zum Betreiben eines Schrottplatzes (4), umfassend mindestens ein Beladungsmittel (20), insbesondere einen Kran, und mindestens ein Transportmittel (22), und mindestens eine Steuereinheit (10), die zur Durchführung des Verfahrens nach einem der vorhergehenden Ansprüche eingerichtet ist.

17. System nach Anspruch 16,
wobei mindestens eine Erfassungseinrichtung (12), insbesondere ein 2D- oder 3D-Laserscanner, zur Vermessung der Lagerstätten (14) an dem mindestens einen Beladungsmittel (20) angeordnet ist.

18. System nach Anspruch 16 oder Anspruch 17,
wobei zu einer Positionsbestimmung des mindestens einen Transportmittels (22) mindestens eine Messeinrichtung (39) vorhanden ist.

19. System nach einem der Ansprüche 16 bis 18,
wobei zur Positionsbestimmung des mindestens einen Beladungsmittels (20) mindestens eine weitere Messeinrichtung (40) vorhanden ist.
